# EUROPÄISCHE PATENTSCHRIFT

(11) **EP 2 808 186 B1**
(45) Veröffentlichungstag und Bekanntmachung des Hinweises auf die Patenterteilung: **13.12.2017**
(21) Anmeldenummer: 14001587.6
(22) Anmeldetag: 06.05.2014
(51) Int. Cl.: B60D 1/48

(54) **Trägeranordnung für eine Anhängekupplung oder einen Lastenträger mit einem Profilkörper**
Support assembly for a trailer coupling or a load bearing device with a profile body
Agencement de support pour un attelage ou un support de charge doté d'un corps profilé

(30) Priorität: 08.05.2013 DE 102013008326
(43) Veröffentlichungstag der Anmeldung: 03.12.2014
(73) Patentinhaber: WESTFALIA - Automotive GmbH, 33378 Rheda-Wiedenbrück (DE)
(72) Erfinder: Angermann, Kay, D-04720 Döbeln (DE)
(74) Vertreter: Patentanwälte Bregenzer und Reule Partnerschaftsgesellschaft mbB

(56) Entgegenhaltungen:
- EP-A1- 2 433 852
- WO-A2-02/062601
- DE-A1- 10 107 080
- DE-U1-202010 012 938
- GB-A- 2 320 215
- US-B1- 7 108 272
- US-B1- 7 607 677

## Beschreibung

Die Erfindung betrifft eine Trägeranordnung für eine Anhängekupplung oder einen Lastenträger gemäß dem Oberbegriff des Anspruchs 1.

Eine derartige Trägeranordnung ist aus US 7,067,677 bekannt.

In DE 10 2011 122 468.1 ist eine Trägeranordnung beschrieben, deren hinterer Querträger als ein Hohlprofilkörper ausgebildet ist. Es ist allgemein üblich, das die Querträger beispielsweise von einem Rohrkörper gebildet sind, der sich dann hinten am Kraftfahrzeug unter dem Heckstoßfänger erstreckt.

Zur Anpassung an verschiedene Fahrzeugkonturen werden dann entsprechend ausgestattete Seitenträger hergestellt, was jedoch aufwändig ist. Zudem besteht die Anforderung, eine Trägeranordnung möglichst leicht auszugestalten.

Davon ausgehend ist es die Aufgabe der vorliegenden Erfindung, eine verbesserte Trägeranordnung sowie ein Verfahren zu deren Herstellung bereitzustellen.

Zur Lösung der Aufgabe ist eine Trägeranordnung gemäß der technischen Lehre des Anspruchs 1 vorgesehen.

Vorteilhaft ist vorgesehen, dass die benachbarten Profilsegmente des Profilkörpers anhand einer gemeinsamen, mit beiden Profilsegmenten einstückigen Umfangswand verbunden sind.

Das erfindungsgemäße Verfahren zur Herstellung einer Trägeranordnung der eingangs genannten Art umfasst die Schritte:
- Ausschneiden von mindestens zwei Profilsegmenten zur Herstellung des Profilkörpers aus einem Rohprofil, wobei aneinander angrenzende Stirnseiten der Profilsegmente durch einen Gehrungsschnitt hergestellt sind, und
- Fügen der Profilsegmente aneinander derart, dass deren Umfangswände stirnseitig in einem schräg zur jeweiligen Längserstreckungsrichtung des Profilsegments verlaufenden Gehrungswinkel miteinander verbunden sind, so dass der Profilkörper einen gekrümmten oder winkeligen Verlauf aufweist, wobei vorgesehen ist, dass die benachbarten Profilsegmente des Profilkörpers durch mindestens einen vor die Umfangswand des einen Profilsegments zum andern Profilsegment hin vorstehenden und mit der Umfangswand des anderen Profilsegments verbundenen Haltevorsprung verbunden sind.

Vorteilhaft ist auch bei dem Verfahren vorgesehen, dass die benachbarten Profilsegmente des Profilkörpers anhand einer gemeinsamen, mit beiden Profilsegmenten einstückigen Umfangswand verbunden sind.

Es ist ein Grundgedanke der vorliegenden Erfindung, dass in materialsparender Weise aus möglichst einem einzigen Rohling Gehrungssegmente ausgeschnitten werden, so dass Profilsegmente stehen bleiben, die dann stirnseitig aneinander gefügt werden. Für einen festen Halt der Profilsegmente aneinander, so dass ein belastbarer Profilkörper gebildet wird, sorgt beispielsweise die durchgehende Umfangswand, die sich zwischen den benachbarten Profilsegmenten erstreckt. Eine weitere bevorzugte Verbindungstechnik zur Verbindung der benachbarten Profilsegmente sieht vor, dass vor die Umfangswand des einen Profilsegments ein Haltevorsprung zum anderen Profilsegment hin vorsteht und mit demselben verbunden wird. Beispielsweise befindet sich an der Umfangswand des anderen Profilsegments eine Halteaufnahme, in die der Haltevorsprung eingreift.

Der Haltevorsprung steht beispielsweise in Längserstreckungsrichtung des Profilsegments, von dem er absteht, zum andern Profilsegment vor.

Bevorzugt ist es, wenn der Haltevorsprung die Halteaufnahme hintergreift, z.B. eine Hakenanordnung geschaffen ist.

Der mindestens eine Haltevorsprung umfasst beispielsweise einen Steckvorsprung, zum Beispiel in der Art eines Zapfens eines Puzzleteils oder dergleichen, der in eine Steckaufnahme am benachbarten Profilsegment, beispielsweise eine Aussparung an dessen Umfangswand, eingreift. Die Steckaufnahme ist beispielsweise eine Zapfenaufnahme. Die Zapfenaufnahme kann sozusagen die Negativkontur für den Puzzleteil-Zapfen aufweisen.

Beispielsweise ist es vorteilhaft, wenn an einer sozusagen kurvenäußeren oder radial äußeren Seite des Profilkörpers die durchgehende Umfangswand vorgesehen ist, während sozusagen kurveninnen bzw. krümmungsinnen eine Verbindung anhand des Haltevorsprungs, der das benachbarte Profilsegment hält, vorgesehen ist. Eine Verbindung mit mindestens einem Haltevorsprung und einer Halteaufnahme kann aber auch auf einer zur bogen- oder kurveninneren Wand winkeligen Wand, z. B. einer oberen oder unteren Wand, vorteilhaft sein.

An dieser Stelle sei erwähnt, dass selbstverständlich mehrere Haltevorsprünge vom einen Profilsegment zum anderen Profilsegment vorstehenden können. Weiterhin ist es möglich, dass an einem Profilsegment beides vorhanden ist, nämlich mindestens ein Haltevorsprung und mindestens eine Halteaufnahme, die zum Eingriff mit einer Halteaufnahme und einem Haltevorsprung am anderen Profilsegment vorgesehen sind.

Wie erwähnt ist es vorteilhaft, wenn der mindestens eine Haltevorsprung einen Haken zum Einhaken in eine Hakenaufnahme am benachbarten Profilsegment des Profilkörpers umfasst. Somit ist eine zugfeste Verbindung zwischen den benachbarten Profilsegmenten möglich.

Der Haltevorsprung umfasst beispielsweise einen Längsschenkel und mindestens einen, vorzugsweise mehrere, quer zu dem Längsschenkel angeordnete und davon seitlich abstehende Hakenschenkel. Die Halteaufnahme ist dazu komplementär ausgestaltet, d.h. sie hat eine Längsaufnahme für den Längsschenkel und eine Hakenaufnahme für den Hakenschenkel. Die Längsaufnahme und die Hakenaufnahme verlaufen ebenfalls quer zueinander. Vorteilhaft ist es, wenn der Hakenschenkel und der Längsschenkel rechtwinkelig zueinander sind. Bevorzugt ist es, wenn der mindestens eine Hakenschenkel an einem freien Endbereich des Haltevorsprungs vorgesehen ist.

Es ist vorteilhaft, wenn eine beispielsweise T-förmige Konfiguration gegeben ist. Zweckmäßigerweise sind beispielsweise am Längsabschnitt oder Längsschenkel des Haltevorsprungs zwei Hakenschenkel einander entgegengesetzt angeordnet.

Ein Außenumfang des Haltevorsprungs, beispielsweise im Bereich seines freien Endes, weist zweckmäßigerweise eine Rundung auf. Auf diese Weise können der Haltevorsprung und die Halteaufnahme, die zweckmäßigerweise ebenfalls eine Rundung aufweist, leicht in Eingriff miteinander gebracht werden.

Der Haltevorsprung umfasst beispielsweise einen oder mehrere Zapfen, während die Halteaufnahme dazu komplementär eine oder mehrere Zapfenaufnahmen aufweist. Der Haltevorsprung umfasst zweckmäßigerweise einen oder mehrere Halteköpfe, die in der Art eines Zapfens eines Puzzleteils ausgestaltet sind. Die Halteaufnahme umfasst eine dazu passende Puzzleteil-artige Halteaufnahme.

Der Haltevorsprung hat zweckmäßigerweise eine plattenartige oder stangenartige Gestalt. Beispielsweise bildet der Haltevorsprung einen plattenartigen oder stangenartigen Verbindungsflansch.

Der mindestens eine Haltevorsprung bildet zweckmäßigerweise einen Bestandteil von Zähnen einer Zahnanordnung, wobei die Zähne der benachbarten Profilsegmente des Profilkörpers ineinander eingreifen.

Eine zusätzliche formschlüssige Verbindung zwischen der Halteaufnahme und dem Haltevorsprung ist vorteilhaft. Abseits der Hakenkonturen sind zweckmäßigerweise an der Halteaufnahme und dem Haltevorsprung Formschlusskonturen eines Formschlusspaars angeordnet. Beispielsweise befinden sich die Formschlusskonturen am Fußbereich des Haltevorsprungs, wo dieser mit dem Bauteil, von dem er absteht, verbunden ist. Bei der Halteaufnahme ist es vorteilhaft, wenn an einem freien Endbereich, von dem her der Haltevorsprung eingesteckt werden kann, eine entsprechende Formschlusskontur vorgesehen ist. Die Formschlusskonturen ermöglichen einen Halt der miteinander durch die Steckverbindung verbundenen Bauteile quer zu der Steckachse, entlang derer die Hakenkonturen in Eingriff bringbar sind bzw. in Eingriff gebracht worden sind.

Der Haltevorsprung bildet zweckmäßigerweise einen Bestandteil einer Biegelasche, die mindestens zwei zueinander winkelige Laschenabschnitte aufweist. Die Biegelasche kann auch einen gekrümmten oder bogenförmigen Krümmungsabschnitt aufweisen sowie einen Laschenabschnitt. Selbstverständlich sind auch Kombinationen möglich, d.h. dass die Biegelasche beispielsweise mehrere zueinander winkelige Laschenabschnitte und/oder Krümmungsabschnitte aufweist. In der Seitenansicht kann die Biegelasche beispielsweise L-förmig oder U-förmig sein.

Es ist vorteilhaft, wenn der Haltevorsprung und die Halteaufnahme mindestens ein Paar quer zu der Steckachse, entlang derer die Hakenkonturen ineinander einsteckbar sind, verlaufende Kontaktflächen aufweisen, die einander gegenüberliegen, wenn der Haltevorsprung in die Halteaufnahme eingesteckt ist. Dann befinden sich die Hakenkonturen beispielsweise in Hintergriff miteinander. Entlang der Steckachse sind also die Hakenkonturen in Hintergriff miteinander bringbar.

Die Kontaktflächen verlaufen beispielsweise schräg zu der Steckachse. Die Kontaktflächen können auch eine Stufenanordnung ausbilden, d.h. dass beispielsweise quer zur Steckachse orientierte Kontaktflächen vorhanden sind.

Der Haltevorsprung weist zweckmäßigerweise mindestens eine nicht rechtwinkelig schräg zu einer nicht in Kontakt mit der Halteaufnahme kommenden Oberfläche verlaufende und/oder eine an einer Stufe gebildete Kontaktfläche auf. Die Halteaufnahme weist zu dieser Kontaktfläche eine Gegenkontaktfläche auf, die zu der Kontaktfläche komplementär ist.

Die großen Kontaktflächen tragen dazu bei, dass der Haltevorsprung mit der Halteaufnahme in relativ großflächigen Kontakt gelangt. Diese Maßnahme ist insbesondere mit der nachfolgend diskutierten stoffschlüssigen Verbindung zwischen dem Haltevorsprung und der Halteaufnahme zweckmäßig, weil nämlich eine relativ große Fügefläche zwischen den miteinander durch die Halteverbindung verbundenen Bauteilen vorhanden ist, die sich für eine zusätzliche Verbindung mit beispielsweise einem Niet, einer Schraube oder auch einem stoffschlüssig verbindendem Verbindungsmaterial eignet. Die lokalen Belastungen des Fügebereichs zwischen Haltevorsprung und Halteaufnahme werden dadurch verringert. Es ergibt sich eine homogene Kraftübertragung.

Der mindestens eine Haltevorsprung ist vorteilhaft durch eine zusätzliche Verbindung, z.B. durch ein Niet, eine Schraube oder dergleichen andere eine zusätzliche formschlüssige Komponente umfassende Verbindung und/oder eine stoffschlüssige Verbindung mit dem anderen Bauteil verbunden. Beispielsweise ist der Haltevorsprung zusätzlich geklebt, geschweißt oder dergleichen. Auch eine Lötverbindung, insbesondere eine Hartlötverbindung, ist ohne weiteres vorteilhaft. Bei den Schweißverbindungen ist es beispielsweise möglich, dass der Haltevorsprung mittels eines Widerstandsschweißens, z.B. Punktschweißens, mit dem anderen Bauteil verbunden ist. Aber auch eine Verschweißung mit Schweißzusatzwerkstoffen, z.B. Material eines Schweißdrahts, ist vorteilhaft.

Die mindestens zwei benachbarten Profilsegmente (es können auch weitere Profilsegmente vorgesehen sein) des Profilkörpers sind zweckmäßigerweise aus einem einzigen oder gemeinsamen Rohling ausgeschnitten und durch die mit den beiden oder weiteren Profilsegmenten einstückige Umfangswand miteinander verbunden. Es ist auch möglich, dass beispielsweise zwei Profilsegmente eines Profilkörpers durch eine Umfangswand miteinander verbunden sind, während andere Profilsegmente über die Verbindung anhand der Haltevorsprünge oder des Haltevorsprungs miteinander verbunden sind.

Es ist weiterhin auch möglich, dass die Stirnseiten, die einen Gehrungswinkel einschließen, stirnseitig miteinander verbunden sind, beispielsweise aneinander angeschweißt oder dergleichen.

Bevorzugt ist es, wenn die mindestens zwei benachbarten Profilsegmente des Profilkörpers miteinander an den Stirnseiten bezüglich der Längserstreckungsrichtungen der Profilsegmente überlappend aneinander gefügt sind. Beispielsweise verlaufen die Stirnwände schräg, d.h. nicht recht winkelig bezüglich einer Oberseite und einer Unterseite der Umfangswand, an der die Stirnwand vorgesehen ist. Aber auch eine Stufenkontur oder eine stufige Anordnung schafft eine Überlappung.

Die überlappenden Stirnwände sind zweckmäßigerweise stoffschlüssig miteinander verbunden, beispielsweise aneinander angeklebt. Auch eine Lötverbindung, insbesondere eine Hartlötverbindung, oder eine Schweißverbindungen ist ohne weiteres vorteilhaft. Ein Formschluss zum Beispiel durch Clinchen oder Stanznieten, aber auch anhand eines Niets, einer Schraube oder dergleichen ist im Überlappungsbereich zweckmäßig.

Es ist möglich, dass die Profilsegmente unterschiedlich ausgestaltet sind. Beispielsweise kann eines der Profilsegmente oder können alle der Profilsegmente ein Hohlprofilsegment sein, d.h. ein umfangsseitig geschlossenes Profilsegment. Ein anderes Profilsegment hat beispielsweise einen L-förmige oder U-förmigen Querschnitt und ist seitlich offen. Mithin muss also der Innenraum nicht komplett von der Umfangswand umschlossen sein. Eine Kombination ist möglich, d.h. dass beispielsweise ein seitlich offenes Profilsegment mit einem Hohlprofilsegment kombiniert ist. Auch durch ein entsprechendes Herstellungsverfahren können an sich zunächst geschlossene Hohlprofilsegmente seitlich geöffnet werden, beispielsweise durch einen schrägen Schnitt.

Eine Ausführungsform der Erfindung kann beispielsweise vorsehen, dass der Profilkörper einen im Querschnitt ringförmig geschlossenen Abschnitt und einen Abschnitt mit einer seitlichen, insbesondere durch den vorgenannten schrägen Schnitt eines Hohlprofilsegments gebildeten, Öffnung aufweist. Die seitliche Öffnung kann beispielsweise dazu dienen, dass Montagebolzen oder dergleichen andere Befestigungselemente, die zur Verbindung mit einer Karosserie des Fahrzeugs, beispielsweise eines Elektrofahrzeugs, eines Personenkraftwagens oder eine Kombination davon, dienen, zugänglich sind. Beispielsweise kann der Profilkörper schräg auslaufen.

Die Profilsegmente können beispielsweise einen polygonalen, zum Beispiel rechteckigen oder sechskantigen, Querschnitt aufweisen. Aber auch ein kreisförmiger, zum Beispiel auch ein elliptischer, Querschnitt ist ohne weiteres möglich.

Ein weiterer Aspekt der Erfindung ist es, dass durch eine Schnitt- oder Formbearbeitung, beispielsweise eines Rohlings, anhand dessen der Profilkörper gebildet ist, und/oder durch Anfügung passender Profilsegmente oder dergleichen eine Anpassung an den Verlauf von Kraft und Spannung entlang der Trägeranordnung möglich ist. Beispielsweise können im Querschnitt kleinere oder andere Profilsegmente in Bereichen mit geringer Belastung vorgesehen sein, während andere Bereiche mit relativ stark belastbaren, beispielsweise im Querschnitt größeren und/oder stärkere Umfangswände aufweisenden Profilsegmenten gebildet sind.

Ein Profilsegment des Profilkörpers kann an einer Stirnseite, mit der es mit dem benachbarten Profilsegment verbunden ist, einen Flanschvorsprung aufweisen. Der Flanschvorsprung ist beispielsweise mit der benachbarten Umfangswand einstückig. Beispielsweise kann entlang der Gehrungskante, mit der die Profilsegmente aneinander anliegen, eine Umkantung vorgenommen werden, so dass ein Flanschvorsprung entsteht, der beispielsweise nach außen oder in Richtung des Innenraums nach innen von der Umfangswand absteht und dort einen Flanschvorsprung ausbildet.

Eine weitere Verbindung der Profilsegmente des Profilkörpers miteinander ist vorteilhaft, beispielsweise durch einen Stoffschluss (Schweißen, Kleben oder dergleichen). Ein Formschluss zum Beispiel durch Clinchen oder Stanznieten, aber auch anhand eines Niets, einer Schraube oder dergleichen ist zweckmäßig.

Die Herstellung des Profilkörpers aus Profilsegmenten erlaubt nahezu beliebige Geometrien. So ist es beispielsweise möglich, dass der Profilkörper mindestens drei Profilsegmente aufweist, von denen ein mittleres Profilsegment zwischen zwei äußeren Profilsegmenten angeordnet ist und mit dem einen äußeren Profilsegment einen ersten Gehrungswinkel und dem anderen Profilsegment einen zweiten Gehrungswinkel einschließt. Die Längserstreckungsachsen der Profilsegmente liegen dabei nicht unbedingt in einer einzigen Ebene, was an sich ja möglich ist, wenn beispielsweise ein mehrfach gekrümmter oder mehrfach winkeliger Profilkörper gebildet ist, sondern können auch in unterschiedlichen Ebenen liegen. Beispielsweise liegen die Längserstreckungsachsen von zwei Profilsegmenten in einer ersten Ebene, während die Längserstreckungsachse des dritten Profilsegments in einer zweiten Ebene liegt, die zur ersten Ebene winkelig ist.

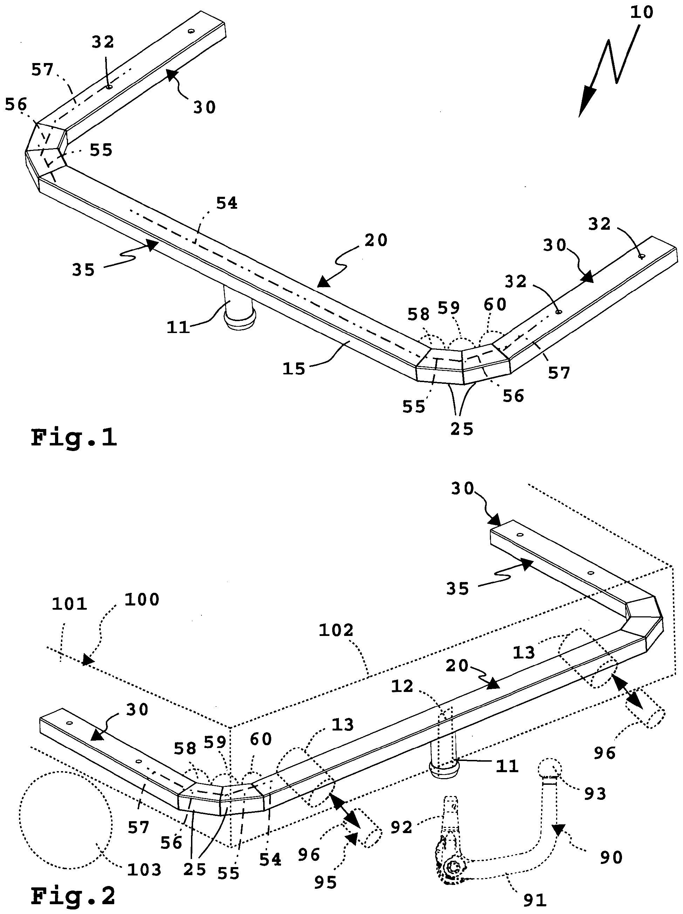

- Figur 1: eine perspektivische Schrägansicht einer ersten Trägeranordnung von in Fahrtrichtung rechts oben,
- Figur 2: die Trägeranordnung gemäß Figur 1 von schräg links oben,
- Figur 3: einen vorbearbeiteten Rohling der Trägeranordnung gemäß Figuren 1 und 2,
- Figur 4: ein Detail A des Rohlings gemäß Figur 3 von schräg oben,
- Figur 5: eine Variante eines weiteren Rohlings für eine erfindungsgemäße Trägeranordnung mit zueinander winkelig ausgeschnittenen Segmenten,
- Figur 6: eine perspektivische Schrägansicht einer zweiten Trägeranordnung von in Fahrtrichtung rechts oben,
- Figur 7: die Trägeranordnung gemäß Figur 6 von schräg links oben,
- Figur 8: eine Seitenansicht von mit Hakenvorsprüngen verbindbaren Profilsegmenten,
- Figur 9: einen Hakenvorsprung und
- Figur 10: eine Hakenaufnahme der Profilsegmente gemäß Figur 8.

Trägeranordnungen 10, 110 dienen zur Befestigung einer Anhängekupplung 90 und/oder eines schematisch angedeuteten Lastenträgers 95. Die Trägeranordnungen 10, 110 sind an einer Karosserie 101 eines Kraftfahrzeugs 100 befestigbar oder befestigt, beispielsweise an dessen Heck 102. Von dem Kraftfahrzeug 100 sind exemplarisch Räder 103 dargestellt. Das Kraftfahrzeug 100 ist beispielsweise ein Personenkraftwagen, insbesondere mit einem Verbrennungsmotor und/oder einem Elektromotor. In der nachfolgenden Beschreibung sind gleiche oder ähnliche Komponenten in der Regel mit denselben Bezugsziffern versehen, teilweise zur Verdeutlichung von Unterschieden mit um jeweils 100 verschiedenen Bezugsziffern.

Die Trägeranordnungen 10 und 110 sind zweckmäßigerweise hinter einem Stoßfänger des Kraftfahrzeugs 100 verborgen. Die Trägeranordnungen 10, 110 haben Querträger 20, 120, die sich entlang des Hecks 102 in Fahrzeugquerrichtung des Kraftfahrzeugs 100 erstrecken. Die Querträger 20-120 werden von Seitenträgern 30 sowie Seitenträgern 130 gehalten, die sich jeweils in Fahrzeuglängsrichtung des Kraftfahrzeugs 100 erstrecken. Die Seitenträger 30, 130 sind beispielsweise mit der Karosserie 101 verschraubt, wofür Durchtrittsöffnungen 32, 132 an den Seitenträgern 30, 130 vorgesehen sind, durch die Schrauben (nicht dargestellt) durchgesteckt oder durchsteckbar und mit der Karosserie 101 verschraubbar sind.

An den Querträgern 20, 120 sind beispielsweise Halterungen 11 für die Anhängekupplung 90 angeordnet. Die Halterungen 11 umfassen beispielsweise eine Halteaufnahme 12, in die ein Steckende 92 eines Kupplungsarms 91 der Anhängekupplung 90 einsteckbar ist. Am Kupplungsarm 91 befindet sich noch ein Kuppelstück 93, zum Beispiel eine Kupplungskugel, zum Ankuppeln eines Anhängers. Anstelle der Halterungen 11 könnte auch beispielsweise eine Lagereinrichtung zum beweglichen Lagern einer Anhängekupplung, beispielsweise zum Schwenken und/oder linearen Verschieben eines Kupplungsarms, vorgesehen sein, so dass der Kupplungsarm zwischen einer nach hinten vor das Heck 102 vorstehenden Gebrauchsstellung und einer beispielsweise hinter den Stoßfänger des Kraftfahrzeugs 100 zurück geschwenkten, verborgenen Nichtgebrauchsstellung beweglich ist, beispielsweise manuell betätigbar und/oder motorisch betätigbar. Ferner eignen sich die Trägeranordnungen 10, 110 auch für fest montierte Kupplungsarme.

An den Querträgern 20, 120 können auch Halterungen 13 zum Halten des Lastenträgers 95 vorgesehen sein. Die Halterungen 13 umfassen beispielsweise Steckaufnahmen, in die Steckvorsprünge 96 des Lastenträgers 95 einsteckbar sind. Der Lastenträger 95 hat beispielsweise eine nicht dargestellte Tragplattform und/oder Tragelemente zum Tragen einer Last, zum Beispiel Rinnen zum Tragen eines Fahrrads. Bei dem Lastenträger 95 kann es sich beispielsweise um einen Fahrradträger handeln.

Die Trägeranordnungen 10, 110, insbesondere die Querträger 20, 120 und die Seitenträger 30, 130 bestehen zweckmäßigerweise aus Metall, insbesondere Stahl oder Aluminium. Zweckmäßigerweise sind diese Komponenten aus Blech hergestellt.

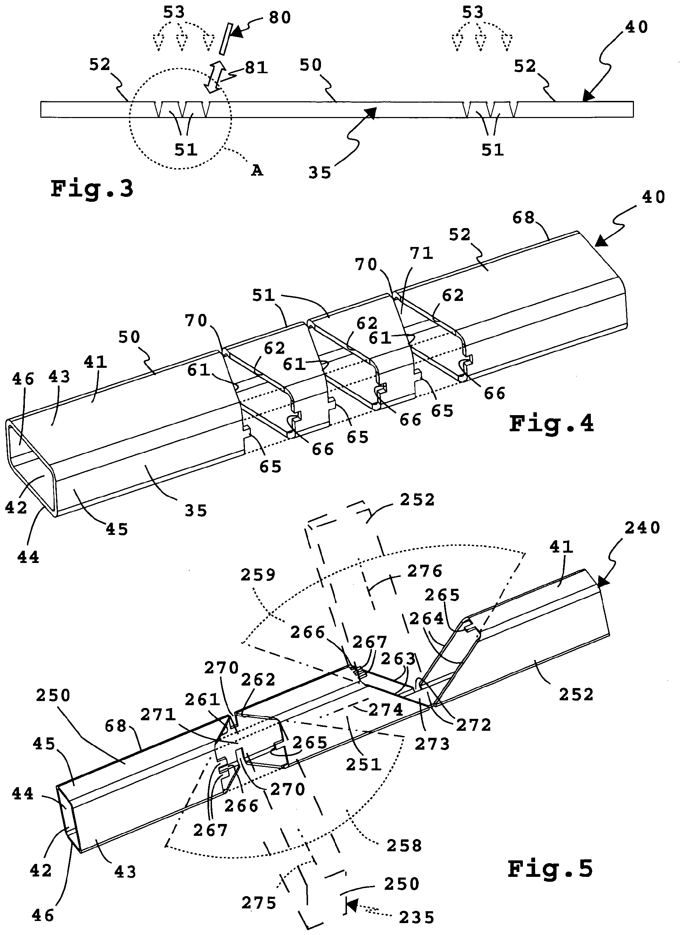

Der Querträger 20 und die Seitenträger 30 der Trägeranordnung 10 sind aus einem einzigen Rohling 40 gebildet, der in Figur 3 dargestellt ist. Der Rohling 40 weist eine Umfangswand 41 auf, die insgesamt geschlossen ist. Mithin ist also der Rohling 40 ein Hohlprofilkörper mit einem geschlossenen Querschnitt. Ein Innenraum 42 ist also vollständig von der Umfangswand 41 umschlossen. Die Umfangswand 41 umfasst eine obere Wand 43 und eine untere Wand 44, die breiter als eine in Figur 4 vordere Schmalseitenwand 45 und eine in Figur 4 hintere Schmalseitenwand 46 sind. In gestrichelten Linien ist der Rohling 40 in Figur 4 in noch unbearbeitetem Zustand angedeutet.

Der Profilkörper-Rohling 40 ist in Figur 4 schon in Profilsegmente unterteilt, nämlich ein mittleres (in Figur 4 teilweise dargestelltes) Profilsegment 50, das den Querträger 20 bildet sowie sich jeweils seitlich daran anschließend zwei Zwischen-Profilsegmenten 51, die einen Bogenabschnitt 25 zwischen dem Querträger 20 und den Seitenträgern 30 ausbilden sowie schließlich Profilsegmente 52, die die Seitenträger 30 bilden. Sämtliche Profilsegmente 50-52 sind miteinander durch mindestens eine Umfangswand, nämlich durch die hintere Schmalseitenwand 46 miteinander verbunden, die quasi eine durchgehende Wand darstellt. Diese Wand bildet eine Umfangsaußenseite 15 der Trägeranordnung 10.

Aus den Profilsegmenten 50-52 ist insgesamt ein Profilkörper 35 gebildet, der seinerseits wiederum den Querträger 20 sowie die seitlich davon abstehenden Seitenträger 30 und die dazwischen liegenden Bogenabschnitte 25 bildet.

Aus dem Rohling 40 sind Segmente 53 beispielsweise mittels eines entlang eines Pfeils 81 geführten Trenn-Werkzeugs 80 ausgeschnitten (Figur 3), die beispielsweise keilförmig sind. Dadurch ist der Rohling 40 sozusagen faltbar, so dass die einzelnen Profilsegmente 50-51 jeweils winkelig zueinander stehen können und insgesamt den sich u-förmig um das Heck 102 des Kraftfahrzeugs 100 erstreckenden Profilkörper 35 ausbilden können. Das Trenn-Werkzeug 80 umfasst beispielsweise eine Schneidenanordnung, ein Stanzwerkzeug, aber auch beispielsweise einen Laser, einen Wasserstrahl oder dergleichen.

Zwischen der Längserstreckungsrichtung 54 des Querträgers 20 und der Längserstreckungsrichtung 55 des sich daran anschließenden ersten Bogenabschnitts 25 ist beispielsweise ein Gehrungswinkel 58 eingeschlossen, während zwischen den Längserstreckungsrichtungen 55 und 56 der beiden Bogenabschnitte 25 ein weiterer Gehrungswinkel 59 eingeschlossen ist. Schließlich geht der Bogenabschnitt 25 mit einem Gehrungswinkel 59 in den Seitenträger 30 über, d.h. zwischen den Längserstreckungsrichtungen 56 und 57 ist ein weiterer Gehrungswinkel 60 eingeschlossen. Vorliegend sind die Gehrungswinkel 58-60 gleich, wobei dies nur eine Option darstellt. Es sind auch unterschiedliche Gehrungswinkel möglich.

Die Profilsegmente 50-52 stoßen mit ihren Stirnseiten 61 und 62, die jeweils an den benachbarten Abschnitten der Umfangswand 41 vorgesehen sind, soweit die Umfangswand 41 nicht durch das Ausschneiden der Segmente 53 ausgeschnitten ist, sozusagen stumpf aneinander.

Die in Figur 4 hinten dargestellte Schmalseitenwand 46 ist jedoch eine durchgehende Wand, d.h. sie verbindet die einzelnen Profilsegmente 50-52, was dem Profilkörper 35 eine hohe Stabilität verleiht. Allerdings sind zusätzlich noch die sich zwischen der Schmalseitenwand 46 und den Wänden 43 und 44 erstreckenden Kantenbereiche 68 des Rohlings 40 mit Schlitzen 70 versehen, das heißt dass sich an den Kantenbereichen 68 entsprechende Aussparungen befinden, was das Falten des Rohlings 40 zu dem Profilkörper 35 erleichtert. Es bleibt jedoch ein Verbindungssegment 71 der Schmalseitenwand 46 stehen, das sich vorzugsweise über ihre gesamte Höhe oder Breite zwischen den Kantenbereichen 68 erstreckt.

Die Stirnseiten 61 und 62 sind beispielsweise aneinander angeklebt oder miteinander verschweißt. Auch eine Lötverbindung ist ohne weiteres vorteilhaft.

Eine zusätzlich sichernde Maßnahme stellt es dar, dass sich vom einen Profilsegment 50-52 zum jeweils nächsten Profilsegment 50-52 ein Haltevorsprung 65 weg erstreckt, der in eine korrespondierende Halteaufnahme 66 am jeweils benachbarten Profilsegment 50-52 eingreift. Die Haltevorsprünge 65 sind in der Art von Zähnen oder Nasen ausgestaltet. Eine Außenumfangskontur eines jeweiligen Haltevorsprungs 65 entspricht einer Innenumfangskontur einer Halteaufnahme 66, so dass die beiden Komponenten formschlüssig ineinander eingreifen können. Somit sind die Profilsegmente 50-52 entgegen einer Scherbewegung quer zu der Ebene, in der sich die Längserstreckungsrichtungen 54-57 jeweils befinden, torsionsfest verbunden.

Weiterhin ist es vorteilhaft, dass die Haltevorsprünge 65 und die Halteaufnahmen 66 im Bereich der Schmalseitenwand 45, also der durchgehenden Schmalseitenwand 46 gegenüberliegend, vorgesehen sind. Somit ist also der Profilkörper 35 sozusagen am Außenumfang und am Innenumfang der Bogenabschnitte 25 jeweils durch einstückige Wandabschnitte der Schmalseitenwand 46 und formschlüssig ineinandergreifende Paarungen von Haltevorsprung 65 und Halteaufnahme 66 an der inneren Schmalseitenwand 45 verbunden.

Es versteht sich, dass beispielsweise auch an den Stirnseiten 61 und 62 im Bereich der oberen Wand 43 und/oder der unteren Wand 44 Haltevorsprünge in der Art der Haltevorsprünge 65 oder auch später noch beschriebener Haltevorsprünge, insbesondere Haken, vorgesehen sein können.

Ein Profilkörper 135 der Trägeranordnung 110 bildet deren Querträger 120 sowie Bogenabschnitte 125 und deren Seitenträger 130 aus. Im Prinzip kann der Profilkörper 135 gleichartig hergestellt werden wie der Profilkörper 35, d.h. dass seine Profilsegmente 150-151 und 152 an sich den Profilsegmenten 50-52 entsprechen und mit beispielsweise einer durchgehenden Seitenwand, zum Beispiel der Schmalseitenwand 45, und/oder anhand von vorstehenden und mit dem benachbarten Profilsegment verbundenen Haltevorsprüngen in der Art der Haltevorsprünge 65 miteinander verbunden sind.

Die Seitenträger 130 sind jedoch zu ihren freien Enden 168 hin abgeschrägt. Während ein End-Abschnitt 169 der Seitenträger 130, der mit dem benachbarten Profilsegment 151 verbunden ist, sozusagen noch das volle Querschnittsprofil des Rohlings 40 aufweist, ist am freien Ende 168 nur noch die Schmalseitenwand 46 vorhanden. Dazwischen erstrecken sich dreieckförmig die nicht abgeschnittenen Teile der oberen Wand 43 und der unteren Wand 44, so dass insgesamt eine U-förmige Öffnung 170 vorhanden ist.

Durch diese Öffnung 170 sind Durchtrittsöffnungen 132 der Trägeranordnung 110 an der eine Bodenwand bildenden Schmalseitenwand 46 gut zugänglich, durch die Bolzen zur Verbindung mit der Karosserie 101 des Kraftfahrzeugs 100 durchgesteckt werden können. Die Durchsteck- oder Durchtrittsöffnungen 132 verlaufen im montierten Zustand der Trägeranordnung 110 horizontal, während die Durchtrittsöffnungen 32 der Trägeranordnung 10 beispielsweise vertikal verlaufen und in der oberen und der unteren Wand 43, 44 vorgesehen sind.

Durch den schrägen Schnitt bzw. die Abschrägung der Seitenträger 130 ist zudem noch eine Anpassung an einen Spannungsverlauf bzw. eine Belastung beim Betrieb bzw. der Nutzung der Trägeranordnung 110 gegeben. Im Bereich der freien Enden 168 ist nämlich die Belastung geringer als im Bereich des Querträgers 120 bzw. des Bogenabschnitt 125. Somit ist die Trägeranordnung 110 sehr leicht.

Darüber hinaus können in sehr günstiger und materialsparender Weise beispielsweise aus einem einzigen Rohling 40 durch komplementären Schnitt einander gegenüberliegende Profilsegmente 152 für zwei Trägeranordnungen 110 hergestellt werden.

In die Figur 5 ist ein weiteres Ausführungsbeispiel für zumindest ein Abschnitt einer Trägeranordnung für eine Anhängekupplung und/oder einen Lastenträger dargestellt. Aus einem Rohling 240, der im Prinzip dem Rohling 40 entspricht, d.h. eine Umfangswand 41 mit den Wänden 44-46 aufweist, sind Profilsegmente 250, 251 und 252 gebildet. Die Profilsegmente 250-252 sind jedoch nicht zu einer Faltung bzw. Krümmung in einer einzigen Ebene vorgesehen, sondern wie in gestrichelten Linien angedeutet zur Faltung bzw. Aneinander-Fügung in mehreren Ebenen, um einen Profilkörper 235 zu bilden. Die zwischen den Profilsegmenten 250-252 vorgesehenen Gehrungswinkel 258, 259 betragen jeweils beispielsweise 90°, d.h. dass die Profilsegmente 250-252 im fertigen Zustand jeweils mit einem Winkel von 90° zueinander stehen, erstrecken sich jedoch in unterschiedlichen Ebenen. Mithin sind also die Längserstreckungsachsen 274 und 275 beispielsweise in der Ebene des Gehrungswinkel 258, während die dritte Längserstreckungsachse 276 des Profilsegments 253 sich in einer dazu um 90° winkeligen Ebene befindet.

Die Profilsegmente 251 und 252 sind durch einen Abschnitt der in der Zeichnung hinteren Wand 44, ein Verbindungssegment 271 der hinteren Wand 44, miteinander verbunden. An der Wand 44 sind sich über die Kantenbereiche 68 hinaus erstreckende Schlitze 270 vorgesehen, die sich über die Kantenbereiche 68 hinweg in die Wand 44 hinein erstrecken. Dennoch ist eine einstückige Verbindung zwischen den Profilsegmenten 252 und 251 über das Verbindungssegment 271 gegeben.

Die Profilsegmente 252 und 251 sind durch einen Abschnitt der Schmalseitenwand 46, der ein Verbindungssegment 273 ausbildet, miteinander verbunden und einstückig. Schlitze 272 zwischen den schräg geschnittenen Stirnseiten 264 und 263 sind weniger tief als die Schlitze 270, wobei sie sich dennoch in den Kantenbereich 68 bzw. über die Kantenbereiche 68 hinweg erstrecken.

Die einander gegenüberliegenden Stirnseiten 261 und 262 der Profilsegmente 250 und 251 sind beispielsweise miteinander verschweißt. An den Wänden 43 der Profilsegmente 250 und 251 sind am einen Profilsegment ein Haltevorsprung 265 und am anderen Profilsegment eine Halteaufnahme 266 vorgesehen, die für einen formschlüssigen Halt und Eingriff der beiden Profilsegmente 250 und 251 im sozusagen gefalteten Zustand der Trägeranordnung sorgen. Die Halteaufnahme 266 ist beispielsweise zwischen zwei vor die Stirnseite 261 vorstehenden Vorsprüngen 267 gebildet. Man könnte die Vorsprünge 267 auch als Zähne oder Nasen ansehen, zwischen denen die Nase oder der Zahn in Gestalt des Haltevorsprungs 265 aufgenommen werden kann. Selbstverständlich kann auch hier noch eine zusätzliche Verbindung mit beispielsweise Lötmaterial, Klebstoff oder einer Verschweißung vorgesehen sein, mithin also eine stoffschlüssige Verbindung.

Die Verbindung anhand der ineinandergreifenden Komponenten Haltevorsprung 265 und Halteaufnahme 266 ist sozusagen an der biegungsinneren Seite zwischen den Profilsegmenten 250 und 251 vorgesehen. Bei der anderen Biegung zwischen den Profilsegmenten 251 und 252 ist auch eine sozusagen krümmungsinnere Verbindung geschaffen, indem nämlich an der Schmalseitenwand 45 vorgesehene Haltevorsprünge und Halteaufnahmen ineinander greifen. Beispielsweise steht vor die Stirnseite 264 der Schmalseitenwand 45 des Profilsegments 252 ein Haltevorsprung 265 vor, der in eine gegenüberliegende Halteaufnahme 266 zwischen Vorsprüngen 267 an der schmalen Stirnseite 263 der Schmalseitenwand 45 des Profilsegments 251 eingreift.

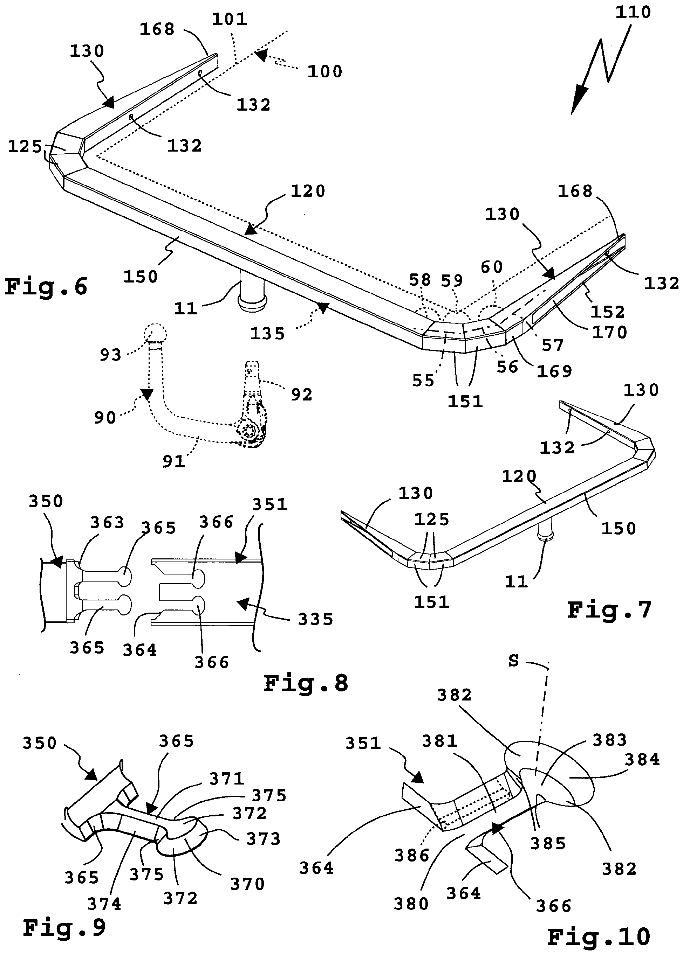

In den Figuren 8, 9 und 10 ist ein weiteres Ausführungsbeispiel, allerdings nur teilweise, dargestellt. An Profilsegmenten 350 und 351 eines Profilkörpers 335, die beispielsweise in der Art der Profilsegmente 50 und 51 ausgestaltet sein können, sind beispielsweise als Haken 370 ausgestaltete Haltevorsprünge 365 vorgesehen, die zum Eingriff in Halteaufnahmen 366 vorgesehen sind, die dementsprechend Hakenaufnahmen 380 bilden. Die Haken 370 umfassen jeweils einen vor die Stirnseite des Profilsegments 350 vorstehenden Längsschenkel 371, von dem seitlich Hakenschenkel 372 abstehen. Die beiden Hakenschenkel 372 bilden einen Zapfenkopf 373 aus. Die Hakenaufnahme 380 hat für den Längsschenkel 371 eine Längsaufnahme 381, von der sich Hakenaufnahmen 382 seitlich weg erstrecken und insgesamt eine Zapfenaufnahme 383 bilden.

Der Zapfenkopf 373 passt also in die Zapfenaufnahme 383.

Zwischen dem Zapfenkopf 373 und dem Längsschenkeln 371 ist eine Hakenkontur 375 ausgebildet, während sich zwischen der Zapfenaufnahme 383 und der Längsaufnahme 381 ebenfalls eine Hakenkontur 385 befindet. Die Hakenkonturen 375 und 385 können beispielsweise durch eine Steckbewegung entlang einer Steckachse S ineinander eingehakt werden. Somit ist jedenfalls in Richtung der Längserstreckungsachsen eine zugfeste Formschluss-Verbindung zwischen den Profilsegmenten 350 und 351 möglich.

Die Schmalseiten des Hakens 370 und der Hakenaufnahme 380, die sich zwischen deren jeweiligen oberen Flachseite und unteren Flachseite erstreckt, ist vorzugsweise schräg geneigt. Mithin sind also schräge Kontaktflächen 374 und 384 an dem Haken 370 und der Hakenaufnahme 380 ausgebildet. Gegenüber einer rechtwinkeligen Konfiguration der Stirnseiten haben die schrägen Kontaktflächen 374 und 384 eine deutlich größere Oberfläche und einem größeren Kontaktbereich miteinander, was eine stoffschlüssige Verbindung mit beispielsweise Lötmaterial, eine Verschweißung oder Verklebung, verbessert.

Anstelle einer schrägen Kontaktfläche 384 könnte beispielsweise eine Stufe 386 vorgesehen sein, zum Beispiel in der Art einer Terrasse. An dem Haken 370 wäre dann eine komplementäre Stufenkontur zweckmäßig.

## Patentansprüche

1. Trägeranordnung für eine Anhängekupplung (90) oder einen Lastenträger (95), wobei die Trägeranordnung (10; 110) einen Querträger (20; 120) zur Montage an einem Heck (102) einer Karosserie (101) eines Fahrzeugs (100) und mindestens eine an dem Querträger (20; 120) angeordnete Halterung (11, 13) für die Anhängekupplung (90) oder für ein Kupplungsteil des Lastenträgers (95) und mindestens einen Profilkörper (35; 135; 235; 335) als Bestandteil des Querträgers (20; 120) oder gegebenenfalls mit dem Querträger (20; 120) verbundenen Seitenträger (30; 130) der Trägeranordnung (10; 110) umfasst, wobei der Profilkörper (35; 135; 235; 335) zur Begrenzung eines Innenraums (42) eine bogenförmige Umfangswand (41) und/oder zueinander winkelige Umfangswände (41) aufweist, wobei der Profilkörper (35; 135; 235; 335) mindestens zwei Profilsegmente (50-52; 150-152; 250-252) aufweist, deren Umfangswände (41) stirnseitig in einem schräg zur jeweiligen Längserstreckungsrichtung (54-57) des Profilsegments (50-52; 150-152; 250-252) verlaufenden Gehrungswinkel (58-60) miteinander verbunden sind, so dass der Profilkörper (35; 135; 235; 335) einen gekrümmten oder winkeligen Verlauf aufweist, **dadurch gekennzeichnet, dass** die benachbarten Profilsegmente (50-52; 150-152; 250-252) des Profilkörpers (35; 135; 235; 335) durch mindestens einen vor die Umfangswand (41) des einen Profilsegments (50-52; 150-152; 250-252) zum anderen Profilsegment (50-52; 150-152; 250-252) hin vorstehenden und mit der Umfangswand (41) des anderen Profilsegments (50-52; 150-152; 250-252) verbundenen Haltevorsprung (65-365) verbunden sind.

2. Trägeranordnung nach Anspruch 1, **dadurch gekennzeichnet, dass** der mindestens eine Haltevorsprung (65-365) einen Steckvorsprung, insbesondere in der Art eines Zapfens eines Puzzleteils, umfasst, der in eine Steckaufnahme, insbesondere eine Zapfenaufnahme, am benachbarten Profilsegment (50-52; 150-152; 250-252) eingreift und/oder und dass die benachbarten Profilsegmente (50-52; 150-152; 250-252) des Profilkörpers (35; 135; 235; 335) anhand einer gemeinsamen, mit beiden Profilsegmenten (50-52; 150-152; 250-252) einstückigen Umfangswand (41) verbunden sind.

3. Trägeranordnung nach Anspruch 1 oder 2, **dadurch gekennzeichnet, dass** der mindestens eine Haltevorsprung (65-365) einen Haken (370) zum Einhaken in eine Hakenaufnahme (380) am benachbarten Profilsegment (50-52; 150-152; 250-252) des Profilkörpers (35; 135; 235; 335) umfasst.

4. Trägeranordnung nach Anspruch 3, **dadurch gekennzeichnet, dass** der Haken (370) und die Hakenaufnahme (380) mindestens ein Paar quer, insbesondere schräg oder stufenartig, zu der Steckachse, entlang derer der Haken (370) und die Hakenaufnahme (380) ineinander einsteckbar sind, verlaufende Kontaktflächen (374, 384) aufweisen, die einander gegenüberliegen, wenn der Haken (370) und in die Hakenaufnahme (380) eingesteckt ist.

5. Trägeranordnung nach einem der vorhergehenden Ansprüche, **dadurch gekennzeichnet, dass** der mindestens eine Haltevorsprung (65-365) eine plattenartige oder stangenartige Verbindungslasche oder Biegelasche umfasst.

6. Trägeranordnung nach einem der vorhergehenden Ansprüche, **dadurch gekennzeichnet, dass** der mindestens eine Haltevorsprung (65-365) einen Bestandteil von Zähnen einer Zahnanordnung bildet, wobei die Zähne der benachbarten Profilsegmente (50-52; 150-152; 250-252) des Profilkörpers (35; 135; 235; 335) ineinander eingreifen.

7. Trägeranordnung nach einem der vorhergehenden Ansprüche, **dadurch gekennzeichnet, dass** die mindestens zwei benachbarten Profilsegmente (50-52; 150-152; 250-252) des Profilkörpers (35; 135; 235; 335) aus einem gemeinsamen Rohling (40) ausgeschnitten sind und durch die mit beiden Profilsegmenten einstückige Umfangswand (41) miteinander verbunden sind.

8. Trägeranordnung nach einem der vorhergehenden Ansprüche, **dadurch gekennzeichnet, dass** die mindestens zwei benachbarten Profilsegmente (50-52; 150-152; 250-252) des Profilkörpers (35; 135; 235; 335) mit einander bezüglich der Längserstreckungsrichtungen (54-57) der Profilsegmente (50-52; 150-152; 250-252) überlappenden, insbesondere mindestens eine Stufenkontur und/oder eine Schräge aufweisende, Stirnwänden aneinander gefügt sind.

9. Trägeranordnung nach einem der vorhergehenden Ansprüche, **dadurch gekennzeichnet, dass** mindestens eines der Profilsegmente (50-52; 150-152; 250-252) ein Hohlprofilsegment (50-52; 150-152; 250-252) mit einer ringförmig geschlossenen Umfangswand (41) ist und/oder mindestens eines der Profilsegmente (50-52; 150-152; 250-252) einen L-förmigen oder U-förmigen Querschnitt aufweist und seitlich offen ist.

10. Trägeranordnung nach einem der vorhergehenden Ansprüche, **dadurch gekennzeichnet, dass** der Profilkörper (35; 135; 235; 335) einen im Querschnitt ringförmig geschlossenen Abschnitt und einen Abschnitt mit einer seitlichen, insbesondere durch einen schrägen Schnitt eines Hohlprofils gebildeten, Öffnung (170) aufweist und/oder dass der Profilkörper (35; 135; 235; 335) den Querträger (20; 120) mit einem Seitenträger (30; 130) verbindet und insbesondere einen Bestandteil des Seitenträgers (30; 130) bildet.

11. Trägeranordnung nach einem der vorhergehenden Ansprüche, **dadurch gekennzeichnet, dass** mindestens ein Profilsegment (50-52; 150-152; 250-252) einen kreisförmigen oder polygonalen, insbesondere rechteckigen, Querschnitt aufweist und/oder dass mindestens ein Profilsegment (50-52; 150-152; 250-252) des Profilkörpers (35; 135; 235; 335) an seiner mit dem benachbarten Profilsegment (50-52; 150-152; 250-252) verbundenen Stirnseite einen insbesondere mit der Umfangswand (41) einstückigen Flanschvorsprung aufweist.

12. Trägeranordnung nach einem der vorhergehenden Ansprüche, **dadurch gekennzeichnet, dass** die Profilsegmente (50-52; 150-152; 250-252) des Profilkörpers (35; 135; 235; 335) miteinander stoffschlüssig und/oder anhand eines Niets und/oder einer Schraube und/oder anhand von Stanznieten oder Clinchen miteinander verbunden sind.

13. Trägeranordnung nach einem der vorhergehenden Ansprüche, **dadurch gekennzeichnet, dass** die die benachbarten Profilsegmente (50-52; 150-152; 250-252) des Profilkörpers (35; 135; 235; 335) verbindende einstückige Umfangswand (41) und der vor die Umfangswand (41) des einen Profilsegments (50-52; 150-152; 250-252) zum andern Profilsegment (50-52; 150-152; 250-252) hin vorstehende und mit der Umfangswand (41) des anderen Profilsegments (50-52; 150-152; 250-252) verbundene Haltevorsprung (65-365) an einander gegenüberliegenden Wänden, insbesondere radial äußeren und inneren Seiten des Profilkörpers (35; 135; 235; 335), vorgesehen sind.

14. Trägeranordnung nach einem der vorhergehenden Ansprüche, **dadurch gekennzeichnet, dass** der Profilkörper (235; 335) mindestens drei Profilsegmente (250-252) aufweist, von denen ein mittleres Profilsegment (251) zwischen zwei äußeren Profilsegmenten (250, 252) angeordnet ist und mit dem einen äußeren Profilsegment (250) einen ersten Gehrungswinkel (258) und dem anderen Profilsegment (252) einen zweiten Gehrungswinkel (259) einschließt und die Längserstreckungsachse (276) mindestens eines der Profilsegmente (252) in einer anderen Ebene liegt als die Längserstreckungsachsen (274, 275) der beiden anderen Profilsegmente (250, 251).

15. Verfahren zur Herstellung einer Trägeranordnung (10; 110) für eine Anhängekupplung (90) oder einen Lastenträger (95), wobei die Trägeranordnung (10; 110) einen Querträger (20; 120) zur Montage an einem Heck (102) einer Karosserie (101) eines Fahrzeugs (100) und mindestens eine an dem Querträger (20; 120) angeordnete Halterung (11, 13) für eine Anhängekupplung (90) oder für ein Kupplungsteil eines Lastenträgers (95) sowie mindestens einen Profilkörper (35; 135; 235; 335) als Bestandteil des Querträgers (20; 120) oder gegebenenfalls mit dem Querträger (20; 120) verbundenen Seitenträger (30; 130) der Trägeranordnung (10; 110) umfasst, wobei der Profilkörper (35; 135; 235; 335) zur Begrenzung eines Innenraums (42) eine bogenförmige Umfangswand (41) und/oder zueinander winkelige Umfangswände (41) aufweist, mit den Schritten:
- Ausschneiden von mindestens zwei Profilsegmenten (50-52; 150-152; 250-252) zur Herstellung des Profilkörpers (35; 135; 235; 335) aus einem Rohprofil, wobei aneinander angrenzende Stirnseiten der Profilsegmente (50-52; 150-152; 250-252) durch einen Gehrungsschnitt hergestellt sind,
- Fügen der Profilsegmente (50-52; 150-152; 250-252) aneinander derart, dass deren Umfangswände (41) stirnseitig in einem schräg zur jeweiligen Längserstreckungsrichtung (54-57) des Profilsegments (50-52; 150-152; 250-252) verlaufenden Gehrungswinkel (58-60) miteinander verbunden sind, so dass der Profilkörper (35; 135; 235; 335) einen gekrümmten oder winkeligen Verlauf aufweist,
**dadurch gekennzeichnet, dass** die benachbarten Profilsegmente (50-52; 150-152; 250-252) des Profilkörpers (35; 135; 235; 335) durch mindestens einen vor die Umfangswand (41) des einen Profilsegments (50-52; 150-152; 250-252) zum anderen Profilsegment (50-52; 150-152; 250-252) hin vorstehenden und mit der Umfangswand (41) des anderen Profilsegments (50-52; 150-152; 250-252) verbundenen Haltevorsprung (65-365) verbunden sind.

## Claims

1. Support assembly for a trailer coupling (90) or a load carrier (95), wherein the support assembly (10; 110) includes a cross-member (20; 120) for mounting on a rear (102) of a body (101) of a vehicle (100) and at least one holder (11, 13) fitted to the cross-member (20; 120), for the trailer coupling (90) or for a coupling part of the load carrier (95), and at least one profile body (35; 135; 235; 335) as part of the cross-member (20; 120) or where applicable side members (30; 130) of the support assembly (10; 110) connected to the cross-member (20; 120), wherein the profile body (35; 135; 235; 335) has a curved peripheral wall (41) and/or peripheral walls (41) at an angle to one another for bounding an interior (42), wherein the profile body (35; 135; 235; 335) has at least two profile segments (50-52; 150-152; 250-252), the peripheral walls (41) of which are connected to one another at the ends in a mitre square (58-60) running at an angle to the respective direction of longitudinal extent (54-57) of the profile segments (50-52; 150-152; 250-252), so that the profile body (35; 135; 235; 335) has a curved or angular course, **characterised in that** the adjacent profile segments (50-52; 150-152; 250-252) of the profile body (35; 135; 235; 335) are connected to one another by at least one holding projection (65-365) protruding from the peripheral wall (41) of the one profile segment (50-52; 150-152; 250-252) towards the other profile segment (50-52; 150-152; 250-252) and connected to the peripheral wall (41) of the other profile segment (50-52; 150-152; 250-252).

2. Support assembly according to claim 1, **characterised in that** the holding projection or projections (65-365) includes or include a plug-in projection, in particular in the manner of a peg of a jigsaw puzzle piece, which engages in a plug-in socket, in particular a peg socket, on the adjacent profile segment (50-52; 150-152; 250-252) and/or that the adjacent profile segments (50-52; 150-152; 250-252) of the profile body (35; 135; 235; 335) are connected with the aid of a common peripheral wall (41) integral with both profile segments (50-52; 150-152; 250-252).

3. Support assembly according to claim 1 or 2, **characterised in that** the holding projection or projections (65-365) include a hook (370) for hooking into a hook seating (380) on the adjacent profile segment (50-52; 150-152; 250-252) of the profile body (35; 135; 235; 335).

4. Support assembly according to claim 3, **characterised in that** the hook (370) and the hook seating (380) have at least one pair of contact surfaces (374, 384) running transversely, in particular at an angle or step-like to the insertion axis along which the hook (370) and the hook seating (380) may be inserted into one another, and lying opposite one another when the hook (370) is inserted in the hook seating (380).

5. Support assembly according to any of the preceding claims, **characterised in that** the holding projection or projections (65-365) includes or include a plate-like or rod-like connecting piece or bending lug.

6. Support assembly according to any of the preceding claims, **characterised in that** the holding projection or projections (65-365) forms or form a component part or parts of teeth of a teeth arrangement, wherein the teeth of the adjacent profile segments (50-52; 150-152; 250-252) of the profile body (35; 135; 235; 335) engage in one another.

7. Support assembly according to any of the preceding claims, **characterised in that** the two or more profile segments (50-52; 150-152; 250-252) of the profile body (35; 135; 235; 335) are cut out of a common blank (40) and are joined together by the peripheral wall (41) integral with both profile segments.

8. Support assembly according to any of the preceding claims, **characterised in that** the two or more profile segments (50-52; 150-152; 250-252) of the profile body (35; 135; 235; 335) are joined together by end faces which overlap relative to the direction of longitudinal extent (54-57) of the profile segments (50-52; 150-152; 250-252), in particular having at least one step contour and/or bevel.

9. Support assembly according to any of the preceding claims, **characterised in that** at least one of the profile segments (50-52; 150-152; 250-252) is a hollow profile segment (50-52; 150-152; 250-252) with an annular closed peripheral wall (41) and/or at least one of the profile segments (50-52; 150-152; 250-252) has an L-shaped or U-shaped cross-section and is open at the side.

10. Support assembly according to any of the preceding claims, **characterised in that** the profile body (35; 135; 235; 335) has a section with an annular closed cross-section and a section with a side opening (170), in particular formed by an oblique section of a hollow profile, and/or that the profile body (35; 135; 235; 335) connects the cross-member (20; 120) with a side member (30; 130) and in particular forms a component part of the side members (30; 130).

11. Support assembly according to any of the preceding claims, **characterised in that** at least one profile segment (50-52; 150-152; 250-252) has a circular or polygonal, in particular rectangular, cross-section and/or that at least one profile segment (50-52; 150-152; 250-252) has on its end face connected to the adjacent profile segment (50-52; 150-152; 250-252) a flange projection, in particular integral with the peripheral wall (41).

12. Support assembly according to any of the preceding claims, **characterised in that** the profile segments (50-52; 150-152; 250-252) of the profile body (35; 135; 235; 335) are joined together by adhesive bonding and/or with the aid of a rivet and/or a screw and/or with the aid of punch rivets or clinches.

13. Support assembly according to any of the preceding claims, **characterised in that** the integral peripheral wall (41) connecting the adjacent profile segments (50-52; 150-152; 250-252) of the profile body (35; 135; 235; 335) and the holding projection (65-365) protruding from the peripheral wall (41) of the one profile segment (50-52; 150-152; 250-252) towards the other profile segment (50-52; 150-152; 250-252) and joined to the peripheral wall (41) of the other profile segment (50-52; 150-152; 250-252) is provided on opposite walls, in particular radially outer and inner sides of the profile body (35; 135; 235; 335).

14. Support assembly according to any of the preceding claims, **characterised in that** the profile body (235; 335) has at least three profile segments (250-252), of which a central profile segment (251) is arranged between two outer profile segments (250, 252) and encloses with the one outer profile segment (250) a first mitre square (258) and with the other profile segment (252) a second mitre square (259), and the axis of longitudinal extent (276) of at least one of the profile segments (252) lies in a different plane from the axes of longitudinal extent (274, 275) of the two other profile segments (250, 251).

15. Method of producing a support assembly for a trailer coupling (90) or a load carrier (95), wherein the support assembly (10; 110) includes a cross-member (20; 120) for mounting on a rear (102) of a body (101) of a vehicle (100) and at least one holder (11, 13) fitted to the cross-member (20; 120), for the trailer coupling (90) or for a coupling part of the load carrier (95), and also at least one profile body (35; 135; 235; 335) as part of the cross-member (20; 120) or where applicable side members (30; 130) of the support assembly (10; 110) connected to the cross-member (20; 120), wherein the profile body (35; 135; 235; 335) has a curved peripheral wall (41) and/or peripheral walls (41) at an angle to one another for bounding an interior (42),
with the steps
- Cutting out from a blank profile of at least two profile segments (50-52; 150-152; 250-252) to produce the profile body (35; 135; 235; 335), wherein adjoining end faces of the profile segments (50-52; 150-152; 250-252) are produced by means of a mitre cut
- Joining the profile segments (50-52; 150-152; 250-252) to one another in such a way that their peripheral walls (41) are joined to one another at the end in a mitre square (58-60) running at an angle to the respective direction of longitudinal extent (54-57), so that the profile body (35; 135; 235; 335) has a curved or angular course,
**characterised in that** the adjacent profile segments (50-52; 150-152; 250-252) of the profile body (35; 135; 235; 335) are connected to one another by at least one holding projection (65-365) protruding from the peripheral wall (41) of the one profile segment (50-52; 150-152; 250-252) towards the other profile segment (50-52; 150-152; 250-252) and connected to the peripheral wall (41) of the other profile segment (50-52; 150-152; 250-252).

## Revendications

1. Agencement de support pour un attelage (90) ou un support de charge (95), dans lequel l'agencement de support (10; 110) comprend une traverse (20 ; 120) pour le montage à un arrière (102) d'une carrosserie (101) d'un véhicule (100) et au moins une fixation (11, 13) agencée au niveau de la traverse (20 ; 120) pour l'attelage (90) ou pour un élément de couplage du support de charge (95) et au moins un corps profilé (35 ; 135 ; 235 ; 335) en tant que composant de la traverse (20 ; 120) ou le cas échéant des longerons (30 ; 130) de l'agencement de support (10 ; 110) reliés à la traverse (20 ; 120), dans lequel le corps profilé (35 ; 135 ; 235 ; 335) présente pour la délimitation d'un espace intérieur (42) une paroi périphérique en forme d'arc (41) et/ou des parois périphériques (41) formant un angle entre elles, dans lequel le corps profilé (35 ; 135 ; 235 ; 335) présente au moins deux segments profilés (50-52 ; 150-152 ; 250-252), dont les parois périphériques (41) sont reliées l'une à l'autre côté avant suivant un angle d'onglet (58-60) s'étendant obliquement par rapport à la direction d'extension longitudinale (54-57) respective du segment profilé (50-52 ; 150-152 ; 250-252), de sorte que le corps profilé (35 ; 135 ; 235 ; 335) présente une allure courbe ou anguleuse, **caractérisé en ce que** les segments profilés (50-52 ; 150-152 ; 250-252) adjacents du corps profilé (35 ; 135 ; 235 ; 335) sont reliés par au moins une saillie de retenue (65-365) faisant saillie de la paroi périphérique (41) de l'un segment profilé (50-52 ; 150-152 ; 250-252) à l'autre segment profilé (50-52 ; 150-152 ; 250-252) et reliée à la paroi périphérique (41) de l'autre segment profilé (50-52 ; 150-152 ; 250-252).

2. Agencement de support selon la revendication 1, **caractérisé en ce que** l'au moins une saillie de retenue (65-365) comprend une saillie d'enfichage, en particulier à la manière d'une excroissance d'une pièce de puzzle, qui vient en prise dans un logement d'enfichage, en particulier un creux, au niveau du segment profilé (50-52 ; 150-152 ; 250-252) adjacent et/ou et **en ce que** les segments profilés (50-52 ; 150-152 ; 250-252) adjacents du corps profilé (35 ; 135 ; 235 ; 335) sont reliés à l'aide d'une paroi périphérique (41) commune, d'un seul tenant avec les deux segments profilés (50-52 ; 150-152 ; 250-252).

3. Agencement de support selon la revendication 1 ou 2, **caractérisé en ce que** l'au moins une saillie de retenue (65-365) comprend un crochet (370) pour l'accrochage dans un logement de crochet (380) au niveau du segment profilé (50-52 ; 150-152 ; 250-252) adjacent du corps profilé (35 ; 135 ; 235 ; 335).

4. Agencement de support selon la revendication 3, **caractérisé en ce que** le crochet (370) et le logement de crochet (380) présentent au moins une paire de surfaces de contact (374, 384) s'étendant transversalement, en particulier obliquement ou de façon étagée, par rapport à l'axe d'enfichage, le long duquel le crochet (370) et le logement de crochet (380) peuvent être enfichés l'un dans l'autre, qui se font face l'une l'autre, lorsque le crochet (370) est enfiché dans le logement de crochet (380).

5. Agencement de support selon l'une quelconque des revendications précédentes, **caractérisé en ce que** l'au moins une saillie de retenue (65-365) comprend une languette de liaison ou une languette flexible de type plaque ou tige.

6. Agencement de support selon l'une quelconque des revendications précédentes, **caractérisé en ce que** l'au moins une saillie de retenue (65-365) fait partie intégrante de dents d'un agencement de dents, dans lequel les dents des segments profilés (50-52 ; 150-152 ; 250-252) adjacents du corps profilé (35 ; 135 ; 235 ; 335) viennent en prise l'une avec l'autre.

7. Agencement de support selon l'une quelconque des revendications précédentes, **caractérisé en ce que** les au moins deux segments profilés (50-52 ; 150-152 ; 250-252) adjacents du corps profilé (35 ; 135 ; 235 ; 335) sont découpés dans une ébauche commune (40) et reliés l'un à l'autre par la paroi périphérique (41) d'une seule pièce avec les deux segments profilés.

8. Agencement de support selon l'une quelconque des revendications précédentes, **caractérisé en ce que** les au moins deux segments profilés (50-52 ; 150-152 ; 250-252) adjacents du corps profilé (35 ; 135 ; 235 ; 335) sont joints l'un à l'autre avec des parois avant se chevauchant l'une l'autre par rapport aux directions d'extension longitudinale (54-57) des segments profilés (50-52; 150-152; 250-252), présentant en particulier au moins un contour étagé et/ou un chanfrein.

9. Agencement de support selon l'une quelconque des revendications précédentes, **caractérisé en ce qu'**au moins un des segments profilés (50-52 ; 150-152 ; 250-252) est un segment profilé creux (50-52 ; 150-152 ; 250-252) avec une paroi périphérique (41) fermée de manière annulaire et/ou au moins un des segments profilés (50-52 ; 150-152 ; 250-252) et présente une section transversale en forme de L ou en forme de U et est ouvert sur le côté.

10. Agencement de support selon l'une quelconque des revendications précédentes, **caractérisé en ce que** le corps profilé (35; 135; 235; 335) présente une section fermée de manière annulaire dans la section transversale et une section avec une ouverture (170) latérale, formée en particulier par une coupe oblique d'un profil creux et/ou **en ce que** le corps profilé (35 ; 135 ; 235 ; 335) relie la traverse (20 ; 120) avec un longeron (30 ; 130) et fait en particulier partie intégrante du longeron (30 ; 130).

11. Agencement de support selon l'une quelconque des revendications précédentes, **caractérisé en ce qu'**au moins un segment profilé (50-52 ; 150-152 ; 250-252) présente une section transversale circulaire ou polygonale, en particulier rectangulaire et/ou **en ce qu'**au moins un segment profilé (50-52 ; 150-152 ; 250-252) du corps profilé (35 ; 135 ; 235 ; 335) présente au niveau de son côté avant relié au segment profilé (50-52 ; 150-152 ; 250-252) adjacent, une saillie de bride d'un seul tenant en particulier avec la paroi périphérique (41).

12. Agencement de support selon l'une quelconque des revendications précédentes, **caractérisé en ce que** les segments profilés (50-52 ; 150-152 ; 250-252) du corps profilé (35 ; 135 ; 235 ; 335) sont reliés l'un à l'autre par correspondance de matière et/ou à l'aide d'un rivet et/ou d'une vis et/ou au moyen de rivetage auto-poinçonneur ou de clinchage.

13. Agencement de support selon l'une quelconque des revendications précédentes, **caractérisé en ce que** la paroi périphérique (41) d'un seul tenant reliant les segments profilés (50-52 ; 150-152 ; 250-252) adjacents du corps profilé (35 ; 135 ; 235 ; 335) et la saillie de retenue (65-365) faisant saillie de la paroi périphérique (41) de l'un segment profilé (50-52 ; 150-152 ; 250-252) à l'autre segment profilé (50-52; 150-152 ; 250-252) et reliant la paroi périphérique (41) de l'autre segment profilé (50-52 ; 150-152 ; 250-252) sont prévues au niveau de parois se faisant face l'une l'autre, en particulier des côtés radialement extérieurs et intérieurs du corps profilé (35 ; 135 ; 235 ; 335).

14. Agencement de support selon l'une quelconque des revendications précédentes, **caractérisé en ce que** le corps profilé (235 ; 335) présente au moins trois segments profilés (250-252), dont un segment profilé médian (251) est agencé entre deux segments profilés extérieurs (250, 252) et forme avec l'un segment profilé extérieur (250) un premier angle d'onglet (258) et avec l'autre segment profilé extérieur (252) un deuxième angle d'onglet (259) et l'axe d'extension longitudinale (276) d'au moins un des segments profilés (252) se trouve dans un autre plan que les axes d'extension longitudinale (274, 275) des deux autres segments profilés (250, 251).

15. Procédé de fabrication d'un agencement de support (10 ; 110) pour un attelage (90) ou un support de charge (95), dans lequel l'agencement de support (10 ; 110) comprend une traverse (20 ; 120) pour le montage à l'arrière (102) d'une carrosserie (101) d'un véhicule (100) et au moins une fixation (11, 13) agencée au niveau de la traverse (20 ; 120) pour un attelage (90) ou pour un élément de couplage d'un support de charge (95) et au moins un corps profilé (35 ; 135 ; 235 ; 335) en tant que composant de la traverse (20 ; 120) ou le cas échéant des longerons (30 ; 130) de l'agencement de support (10 ; 110) reliés à la traverse (20 ; 120), dans lequel le corps profilé (35 ; 135 ; 235 ; 335) présente pour la délimitation d'un espace intérieur (42) une paroi périphérique en forme d'arc (41) et/ou des parois périphériques (41) formant un angle entre elles, avec les étapes de :
- découpe d'au moins deux segments profilés (50-52 ; 150-152; 250-252) pour la fabrication du corps profilé (35 ; 135 ; 235 ; 335) à partir d'un profil brut, dans lequel des côtés avant adjacents l'un à l'autre des segments profilés (50-52 ; 150-152 ; 250-252) sont fabriqués par une coupe en onglet,
- jonction des segments profilés (50-52 ; 150-152 ; 250-252) l'un à l'autre de telle manière que leurs parois périphériques (41) sont reliées l'une à l'autre côté avant suivant un angle d'onglet (58-60) s'étendant obliquement par rapport à la direction d'extension longitudinale (54-57) respective du segment profilé (50-52 ; 150-152 ; 250-252), de sorte que le corps profilé (35 ; 135 ; 235 ; 335) présente une allure courbe ou anguleuse,
**caractérisé en ce que** les segments profilés (50-52 ; 150-152 ; 250-252) adjacents du corps profilé (35 ; 135 ; 235 ; 335) sont reliés par au moins une saillie de retenue (65-365) faisant saillie de la paroi périphérique (41) de l'un segment profilé (50-52 ; 150-152 ; 250-252) à l'autre segment profilé (50-52 ; 150-152 ; 250-252) et reliée à la paroi périphérique (41) de l'autre segment profilé (50-52 ; 150-152 ; 250-252).
